# EUROPÄISCHE PATENTSCHRIFT

(11) **EP 0 961 421 B1**
(45) Veröffentlichungstag und Bekanntmachung des Hinweises auf die Patenterteilung: **04.07.2007**
(21) Anmeldenummer: 99108782.6
(22) Anmeldetag: 03.05.1999
(51) Int. Cl.: H04B 7/26

(54) **Verfahren zum Übermitteln einer die Übertragungskapazität anzeigenden Information von einer zentralen zu zumindest einer dezentralen Einrichtung über eine Funkstrecke**
Method of communication on a radio link, from a central to a decentral unit, of an information indicating a transmission capacity
Procédé de communication sur une liaison radio, d'un dispositif central à un dispositif décentral, d'une information d'indication de capacité de transmission

(30) Priorität: 27.05.1998 DE 19823683
(43) Veröffentlichungstag der Anmeldung: 01.12.1999
(73) Patentinhaber: SIEMENS AKTIENGESELLSCHAFT, 80333 München (DE)
(72) Erfinder: Sibila,Arnd, 82272. Moorenweis (DE); Knauer, Hans-Ulrich, 17498 Neuenkirchen (DE); Hofmann, Jürgen, 86415 Mering (DE)

(56) Entgegenhaltungen:
- EP-A- 0 670 640
- WO-A-95/19071
- WO-A-98/18285
- "Digital Enhanced Cordless Telecommunications (DECT)" EUROPEAN TELECOMMUNICATION STANDARD, [Online] 1. September 1996 (1996-09-01), XP002304409 Gefunden im Internet: URL:http://www.etsi.org> [gefunden am 2004-11-05]

## Beschreibung

Kommunikationsendgeräte können drahtgebunden oder drahtlos an Kommunikationssysteme bzw. Kommunikationsnetze angeschlossen werden. Für den drahtlosen Anschluß von Kommunikationsendgeräten sind RLL (Radio Local Loop)- oder WLL (Wireless Local Loop)- Systeme vorgesehen. Bei derartigen Systemen sind Netzabschlußeinrichtungen drahtlos mit Basisstationen verbunden, wobei mehrere Basisstationen einer weiteren Vorfeldeinrichtung - insbesondere bei größeren Kommunikationsnetzen - oder direkt einem Kommunikationssystem - insbesondere in privaten Kommunikationsnetzen - zugeordnet sind. Die Kommunikationsendgeräte sind drahtgebunden an die jeweiligen Netzabschlußeinrichtungen angeschlossen. Der drahtlose Anschluß ist durch eine Funkstrecke realisiert, die überwiegend nach dem internalionalen DECT- oder CDMA-Standard ausgestaltet ist. Im internationalen DECT-Standard - ETSI-Empfehlung ETS 300 175 Teil 1 bis 9 - sind die physikalischen und prozeduralen Eigenschaften definiert. Die Übertragung von Informationen erfolgt gemäß dem TDMA (Time Division Muliple Access)- Verfahren, d.h. die Funkstrecke ist in 24 Zeitschlitze unterteilt, wobei jeweils 12 Zeitschlitze für eine Übertragungsrichtung vorgesehen sind. Ein RLL-System ist beispielsweise in der Druckschrift "DECTlink Radio Access: Where Performance Counts",Fa. Siemens, 8/1996 beschrieben. Durch eine Integration einer Netzabschlußeinrichtung in ein Kommunikationsendgerät kann dieses als mobiles Kommunikationsendgerät ausgestaltet werden und ebenfalls an eine Basisstation drahtlos angeschlossen werden.

Gemäß dem DECT-Basisstandard ETS 300 175-Teil 3 (MAC Layer) können Basisstationen (RFP) mit einer "Blind Slot Information" einer Rundsendenachricht - ETS 300 175-Teil 3, Kap. 7.2.4.3.3 - ihren Belegungszustand der einzelnen Zeitschlitze aussenden. Diese Information zeigt an, wie die einzelnen Zeitschlitze durch akuelle Verbindungen - beispielsweise Telefonverbindungen - belegt sind. Mit Hilfe dieser "Blind Slot Information" kann die jeweilige Netzabschlußeinrichtung bzw. ein mobiles Kommunikationsendgerät eine Belegungsübersicht ermitteln und diese dahingehend untersuchen, ob eine Belegung mit einem Doppel-Zeitschlitz möglich ist. Ein Doppel-Zeitschlitz ist eine Aufeinanderfolge von zwei Zeitschlitzen - ETS 300 175 Teil 1, Kap.4.2.1. Die Ermittlung bzw. Berechnung der Belegung mit Doppel-Zeitschlitzen bzw. der noch freien Doppel-Zeitschlitze erfordert einen zusätzlichen Zeitaufwand und bedeutet eine erhebliche dynamische Belastung der Netzabschlußeinrichtungen bzw. mobilen Kommunikationsendgeräte.

Die der Erfindung zugrundeliegende Aufgabe besteht darin, die dynamische Belastung der Netzabschlußeinrichtungen bzw. mobilen Kommunikationsendgeräte zu reduzieren. Die Aufgabe wird ausgehend von jeweils einem Verfahren gemäß den Merkmalen des Oberbegriffs der Patentansprüche 1 und 2 jeweils durch dessen kennzeichnende Mermale gelöst.

Ein wesentlicher Aspekt des erfindungsgemäßen Verfahrens nach Patentanspruch 1 ist darin zu sehen, daß in einer von der zentralen Einrichtung ausgesandten, in Übertragungsrahmen einfügbare Rundsendenachricht eine die Belegung von Doppel-Zeitschlitzen anzeigende Doppel-Zeitschlitz-Information eingefügt ist. Durch das Einfügen dieser Doppel-Zeitschlitz-Information zusätzlich zur die Einzel-Zeitschlitz-Belegung anzeigenden Information in die Rundsendenachricht kann eine Netzabschlußeinrichtung bzw. ein mobiles Kommunikationsendgerät in kürzester Zeit einen freien Doppel-Zeitschlitz ermitteln und zeitkritische Verbindungsaufbauten weiterführen. Durch das Aussenden der Doppel-Zeitschlitz-Informationen wird in den Netzabschlußeinrichtungen bzw. mobilen Kommunikationsendgeräten zusätzlich Rechnerleistung eingespart. Zwar ist in den Basisstationen ein geringfügiger Mehraufwand erforderlich, jedoch ist dieser nur einmal für mehrere anschließbare Netzabschlußeinrichtungen bzw. mobile Kommunikationsendgeräte zu leisten.

Ein weiterer wesentlicher Aspekt des erfindungsgemäßen Verfahrens ist darin zu sehen, daß bei einer Verbindung der zentralen Einrichtung zu einem Kommunikationsnetz entweder die Doppel-Zeitschlitz-Information und/ oder eine die Übertragungskapazität der zentralen Einrichtung zum Kommunikationsnetz anzeigende Übertragungsinformation in die Rundsendenachricht einfügbar ist. Vorteilhaft gibt die Übertragungsinformation die Anzahl der verfügbaren Doppelzeitschlitze an.

Durch das zusätzliche Einfügen dieser Übertragungsinformation wird der jeweiligen Netzabschlußeinrichtung bzw. dem jeweiligen mobilen Kommunikationsendgerät mitgeteilt, wie viele von einer Basisstation in Richtung Kommunikationsnetz mögliche Doppel-Zeitschlitze belegt bzw. wie viele noch verfügbar sind. Diese Information ist besonders vorteilhaft, sofern die Doppel-Zeitschlitz-Kapazität in Richtung Kommunikationsnetz geringer als die der Funkstrecke ist und/oder die Belegung der Übertragungsstrecke in Richtung Kommunikationsnetz mit Einzel-Zeitschlitzen fragmentiert ist. So wird beispielsweise von einer Netzabschlußeinrichtung bzw. einem mobilen Kommunikationsendgerät ein Doppel-Zeitschlitz anfordernder Verbindungsaufbau abgebrochen, sofern zwar auf der Funkstrecke noch Doppel-Zeitschlitze frei sind - wird durch die Doppel-Zeitschlitz-Information angezeigt -, jedoch alle Doppel-Zeitschlitze auf der Übertragungsstrecke in Richtung Kommunikationsnetz belegt sind oder die Übertragungsstrecke derart fragmentiert mit Einzel-Zeitschlitzen belegt ist, daß keine Doppel-Zeitschlitz-Belegung nicht mehr möglich ist. Dies bedeutet eine weitere Reduzierung der dynamischen Belastung der Netzabschlußeinrichtungen und der mobilen Kommunikationsendgeräte und auch der zentralen Einrichtung, da aufgrund der Mitteilung über die fehlende Übertragungskapazität in Richtung Kommunikationsnetz ein aktueller Verbindungsabbau nicht mehr durchgeführt wird.

Bei einer DECT-Realisierung ist vorteilhaft der Informationstyp der Doppel-Zeitschlitz-Information und/oder Übertragungsinformation durch das 33-ste bis 36-ste Bit der in der Mediumzugriffsschicht definierten Rundsendenachricht bestimmt. Diese Konzeption basiert auf der in ETS 300 175 Teil 3, Kap. 7.2.4. beschriebenen Struktur einer Rundsendenachricht - im Standard mit Paging Tail bezeichnet - und definiert den Informationstyp der Doppel-Zeitschlitz-Information und/oder der Übertragungsinformation. Gemäß einer vorteilhaften Ausgestaltung ist durch das 33-ste bis 36-ste Bit der Rundsendenachricht ein bisher für zukünftige Anwendungen reservierter Informationstyp oder ein frei benutzbarer Informationstyp bestimmt. Hierbei kann der Informationstyp als spezieller Informationstyp "Blind Double Slot" definiert werden, wobei ein für zukünftige Anwendungen reservierter Meldungstyp "reserved" verwendet wird. Alternativ kann ein frei verwendbarer Meldungstyp "escape" für das Aussenden der Doppel-Zeitschlitz-Information und/oder Übertragungsinformation verwendet werden.

Die Doppel-Zeitschlitz-Information und/oder Übertragungsinformation ist vorteilhaft im 37-sten bis 48-sten Bit der Rundsendenachricht (TR) eingefügt. Diese Maßnahme erfolgt wiederum gemäß der in ETS 300 175 Teil 3, Kap. 7.2.4. beschriebenen Struktur einer Rundsendenachricht. Da für die Übermittlung der Doppel-Zeitschlitz-Information nicht die Belegung aller verfügbaren Bits erforderlich ist, ist die Doppel-Zeitschlitz-Information vorteilhaft im 37-sten bis 42-sten Bit der Rundsendenachricht eingefügt. Die Übertragungsinformation ist bei einer Standardgemäßen Realisierung vorteilhaft in das 46-ste bis 48-ste Bit der Rundsendenachricht eingefügt.

Weitere vorteilhafte Ausgestaltungen des erfindungsgemäßen Verfahrens sind den weiteren Patentansprüchen zu entnehmen.

Im folgenden wird das erfindungsgemäße Verfahren anhand von zwei Zeichnungen näher erläutert. Dabei zeigen
- Fig. 1: in einem Blockschaltbild ein für den Einsatz des erfindungsgemäßen Verfahrens ausgestaltetes Zubringernetz und
- Fig. 2: die Struktur einer Rundsendenachricht.

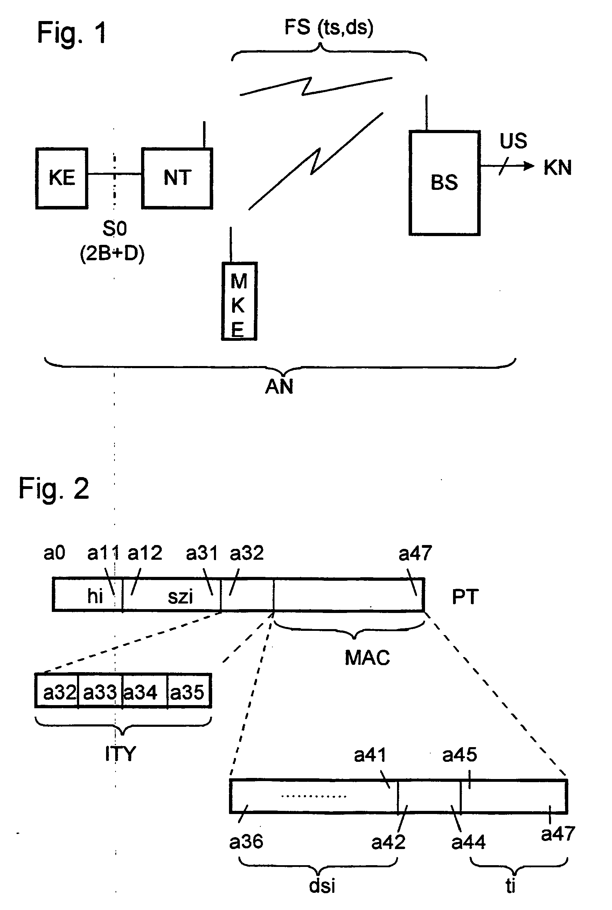

Fig. 1 zeigt ein Zubringernetz AN eines Kommunikationsnetzes KN, bei dem an eine Basisstation BS eine Netzabschlußeinrichtung NT und ein mobiles Kommunikationsendgerät MKE drahtlos angeschlossen sind. Üblicherweise sind in einem Zubringernetz AN mehrere Basisstationen BS angeordnet, an die jeweils mehrere Netzabschlußeinrichtungen NT und mobile Kommunikationsendgeräte MKE drahtlos angeschlossen sind, d.h. in Fig.1 sind lediglich die zur Erläuterung des erfindungsgemäßen Verfahrens erforderlichen Einrichtungen eines Zubringernetzes AN dargestellt, wobei die Basisstation BS die zentrale Einrichtung und die Netzabschlußeinrichtung NT sowie das mobile Kommunikationsendgerät MKE die dezentralen Einrichtungen repräsentieren.

An die Netzabschlußeinrichtung NT ist drahtgebunden über beispielsweise einen ISDN-Basisanschluß S0 ein ISDN-Kommunikationsendgerät KE angeschlossen, wobei das Kommunikationsendgerät KE und der ISDN-Basisanschluß S0 gemäß den einschlägigen internationalen ISDN-Standards realisiert sind. Ein ISDN-Basisanschluß S0 weist zwei Nachrichtenkanäle B mit jeweils einer Übermittlungsgeschwindigkeit von 64 kbit/s und einen Signalisierungskanal D mit einer Übermittlungsgeschwindigkeit von 16 kbit/s auf.

Der drahtlose Anschluß der Netzabschlußeinrichtung NT bzw. des mobilen Kommunikationsendgerätes KE wird durch eine Funkstrecke FS realisiert, die gemäß dem internationalen ETSI-Standard ETS 300 175 Teil 1 bis 9 realisiert ist. Gemäß diesem Standard ist die Funkstrecke in 24 Zeitschlitze ts unterteilt, wobei jeweils 12 Zeitschlitze ts einer Übertragungsrichtung zugeordnet sind - in Fig.1 durch die Bezeichnung ts angedeutet. Über jeden der Zeitschlitze ts können digitale

Informationen - beispielsweise digitalisierte, komprimierte Sprachinformationen - mit einer Übertragungsgeschwindigkeit von 32 kbit/s übertragen werden. Über zwei aufeinanderfolgende Zeitschlitze ts, die standardgemäß mit Doppel-Zeitschlitze ds (double slots) bezeichnet werden - können Informationen mit einer Übertragungsgeschwindigkeit von 64 kbit/s übertragen werden - in der Fig.1 durch die Bezeichnung ds angedeutet. Da bei einer Verbindung über einen ISDN-Basisanschluß S0 zwei Nachrichtenkanäle B mit jeweils 64 kbit/s über die Funkstrecke FS bereitzustellen sind, müssen folglich zwei Doppelzeitschlitze'ds und für den Signalisierungskanal D ein einfacher Zeitschlitz ts belegt werden.

Um der Netzabschlußeinrichtung NT bzw. dem mobilen Kommunikationsendgerät MKE anzuzeigen, welcher der 24 Zeitschlitze ts durch andere Verbindungen bereits belegt ist, wird in einer in der ETS 300 175 Teil 3, Kap.7.2.4. standardisierten Rundsendenachricht PT - siehe Fig. 2 - eine "Blind Full Slot"-Information ausgesandt. Die "Blind Full Slot"-Information enthält Angaben über die Belegung der einzelnen Zeitschlitze ts, nicht jedoch über die belegten Doppel-Zeitschlitze ds. Erfindungsgemäß wird zusätzlich zur "Blind Full Slot"-Information eine Doppel-Zeitschlitz-Information dsi in die Rundsendenachricht PT eingefügt und bei Bedarf ausgesandt - siehe hierzu ETS 300 175 Teil, Kap. 6.2.2.1.1.

In Fig. 2 ist die Struktur der Rundsendenachricht PT dargestellt, wobei eine Rundsendenachricht PT 48 Bit umfaßt. In die ersten 12 Bits - in Fig.1 mit a0 - a11 bezeichnet - sind Header-Informationen hi gemäß ETS 300 175 Teil 3, Kap.7.1 bis 7.2.3. eingefügt, wobei durch diese Header-Information hi die Nachricht als Rundsendenachricht PT bestimmt wird und der Rahmen angegeben ist, in dem die Rundsendenachricht PT ausgesandt wird. Im 13-ten bis 32-sten Bit - in der Fig.2 mit a12 bis a31 bezeichnet - werden Zeitschlitz-spezifische Informationen szi übertragen - siehe hierzu ETS 300 175 Teil 3, Kap.7.2.4.1.2. Im 33-sten bis 48-sten Bit a32,a47 wird die Information der MAC (Medium Access Control)-Schicht MAC übertragen, wobei durch das 33-ste bis 36-ste Bit a32,a35 der Informationstyp ITY der Informationen der MAC-Schicht MAC angegeben ist. Eine der standardisierten Informationstypen ITY ist beispielsweise "Blind full slot", Erfindungsgemäß wird für die Übermittlung der Doppel-Zeitschlitz-Informationen dsi und/oder der Übertragungsinformation ti entweder einer der bisher für weitere Anwendungen reservierten Informationstypen ITY "reserved" als "Blind double slot" beispielsweise mit der Bitkombination a32-1,a33-1,a34-0,a35-0 definiert oder der frei verwendbare Informationstyp ITY "escape" mit der Bitkombination a32-0,a33-1,a34-1,a35-1 verwendet.

Bei beiden Varianten werden in die nachfolgende beschriebenen 37-ste bis 48-ste Bits a36,a48 die zu übermittelnden Informationen in gleicher Weise eingefügt. So werden mit dem 37-sten bis 45-sten Bit a36,a41 die Doppel-Zeitschlitz-Informationen dsi eingetragen.

Die Bedeutung einer logischen "1" oder "0" im 37-sten bis 42-sten Bit a36 bis a41 ist beispielsweise wie folgt:
- a36 = "1": Doppel-Zeitschlitz ds, der die Zeitschlitze 0 und 1 sowie die Rückkanal-Zeitschlitze 12,13 umfaßt, ist nicht belegt oder
- a36 = "0": vorhergehend genannter Doppel-Zeitschlitz ds ist belegt,
- a37 = "1": Doppel-Zeitschlitz ds, der die Zeitschlitze 2 und 3 sowie die Rückkanal-Zeitschlitze 14,15 umfaßt, ist nicht belegt oder
- a37 = "0": vorhergehend genannter Doppel-Zeitschlitz ds ist belegt,
- a38 = "1": Doppel-Zeitschlitz ds, der die Zeitschlitze 4 und 5 sowie die Rückkanal-Zeitschlitze 16,17 umfaßt, ist nicht belegt oder
- a38 = "0": vorhergehend genannter Doppel-Zeitschlitz ds ist belegt,
- a39 = "1": Doppel-Zeitschlitz ds, der die Zeitschlitze 6 und 7 sowie die Rückkanal-Zeitschlitze 18,19 umfaßt, ist nicht belegt oder
- a39 = "0": vorhergehend genannter Doppel-Zeitschlitz ds ist belegt,
- a40 = "1": Doppel-Zeitschlitz ds, der die Zeitschlitze 8 und 9 sowie die Rückkanal-Zeitschlitze 20,21 umfaßt, ist nicht belegt oder
- a40 = "0": vorhergehend genannter Doppel-Zeitschlitz ds ist belegt,
- a41 = "1": Doppel-Zeitschlitz ds, der die Zeitschlitze 10 und 11 sowie die Rückkanal-Zeitschlitze 22,23 umfaßt, ist nicht belegt oder
- a41 = "0": vorhergehend genannter Doppel-Zeitschlitz ds ist belegt.

Der Beginn der Doppel-Zeitschlitz-Angabe ist hierbei auf die Zeitschlitze ts mit einer geraden Nummer bezogen. Die Angabe der "Blind slot information" mit der Angabe der einzelnen belegten Kanäle bleibt erhalten, d.h. die Informationen werden weiterhin angegeben.

Erfindungsgemäß kann in das 46-ste bis 48-ste Bit a45,a47 eine Übertragungsinformation ti eingefügt werden. Durch diese Angabe wird den Netzabschlußeinrichtungen NT bzw. den mobilen Kommunikationsendgeräten MKE mitgeteilt, wie viele der zwischen den Basisstationen BS und dem Kommunikationsnetz KN eingerichteten Doppel-Zeitschlitze ds frei sind. Diese Übertragungsinformation ti ist insbesondere von Bedeutung, wenn die Übertragungskapazität der Funkstrecke FS größer als die Übertragungskapazität der zum Kommunikationsnetz KN führenden Übertragungsstrecke US bzw. führenden Übertragungsstrecken US ist - beispielsweise auf der Funkstrecke 6 Doppel-Zeitschlitze ds und auf der Übertragungsstrecke US nur 4 Doppel-Zeitschlitze ds. Die Übermittlung der Übertragungsinformation ti ist auch von Bedeutung, wenn die Übertragungsstrecke US sehr fragmentiert mit Einzel-Zeitschlitzen belegt und die Belegung mit Doppel-Zeitschlitzen ds schwierig ist.

Die Bedeutung einer logischen "1" oder "0" im 46-sten bis 48-sten Bit a45 bis a47 ist beispielsweise wie folgt:

| a45 | a46 | a47 | Anzahl der verfügbaren Doppel-Zeitschlitze ds zwischen Basisstation BS und Kommunikationsnetz KN |
|---|---|---|---|
| 0 | 0 | 0 | 0 |
| 0 | 0 | 1 | 1 |
| 0 | 1 | 0 | 2 |
| 0 | 1 | 1 | 3 |
| 1 | 0 | 0 | 4 |
| 1 | 0 | 1 | 5 |
| 1 | 1 | 0 | ≥ 6 |

Die noch nicht benutzten 43-sten bis 45-sten Bits a42,a44 bleiben für die Übermittlung von weiteren Informationen, die auf Doppel-Zeitschlitz bezogen sind, reserviert.

Nach Empfang einer mit vorhergehend beschriebenen Informationen dsi, ti versehenen Rundsendenachricht PT in einer Netzabschlußeinrichtung NT oder in einem mobilen Kommunikationsendgerät MKE kann in sehr kurzer Zeit mit minimalem Rechneraufwand mit großer Sicherheit ermittelt werden, ob bei einem aktuellen Verbindungsaufbau die angeforderten Doppel-Zeitschlitze ds sowohl auf der Funkstrecke FS als auch auf der zum Kommunikationsnetz KN führenden Übertragungsstrecke US verfügbar sind und ein aktueller Verbindungsaufbau weitergeführt werden kann.

Das erfindungsgemäße Verfahren ist nicht auf die im Ausführungsbeispiel genannten Varianten beschränkt, sondern es sind andere Bitkombinationen und andere Zuordnungen von logischen Informationen möglich.

## Patentansprüche

1. Verfahren zum Übermitteln einer die Übertragungskapazität anzeigenden Information von einer zentralen Einrichtung (BS), die über eine zeitschlitz-orientierte Funkstrecke (FS) mit zumindest einer dezentralen Einrichtung (NT,MKE) kommuniziert,
**dadurch gekennzeichnet,**
**daß** in einer von der zentralen Einrichtung (BS) ausgesandten, in Übertragungsrahmen einfügbaren Rundsendenachricht (PT) eine die Belegung von Doppel-Zeitschlitzen (ds) anzeigende Doppel-Zeitschlitz-Information (dsi) eingefügt wird.

2. Verfahren nach Anspruch 1, **dadurch gekennzeichnet, daß** bei einer Verbindung der zentralen Einrichtung (BS) mit einem Kommunikationsnetz (KN) in die Rundsendenachricht (PT) zusätzlich eine die Übertragungskapazität von der zentralen Einrichtung (BS) zum Kommunikationsnetz (KN) anzeigende Übertragungsinformation (ti) eingefügt wird, wobei durch die Übertragungsinformation (ti) der dezentralen Einrichtung (NT, MKE) mitgeteilt wird, wieviele der zwischen der zentralen Einrichtung (BS) und dem Kommunikationsnetz (KN) eingerichteten Doppel-Zeitschlitze (ds) frei sind.

3. Verfahren nach Anspruch 2, **dadurch gekennzeichnet, daß** die Übertragungsinformation (ti) eine Anzahl verfügbarer Doppel-Zeitschlitze (ds) angibt.

4. Verfahren nach einem der vorhergehenden Ansprüche, **dadurch gekennzeichnet, daß** die Funkstrecke (FS) gemäß dem internationalen Standard ETS 300 175 realisiert wird.

5. Verfahren nach Anspruch 4, **dadurch gekennzeichnet, daß** der Informationstyp (ITY) der Doppel-Zeitschlitz-Information (dsi) und/oder der Übertragungsinformation (ti) durch das 33-ste (a32) bis 36-ste (a35) Bit der in der Mediumzugriffsschicht (MAC) definierten Rundsendenachricht (PT) bestimmt wird.

6. Verfahren nach Anspruch 5, **dadurch gekennzeichnet, daß** für die Übermittlung der Doppel-Zeitschlitz-Informationen (dsi) und/oder der Übertragungsinformation (ti) entweder einer der bisher für weitere Anwendungen reservierten Informationstypen (ITY) "reserved", die als "Blind double slot" durch das 33-ste (a32) bis 36-ste (a35) Bit definiert sind, oder der frei verwendbare Informationstyp (ITY) "escape" verwendet wird, der durch das 33-ste (a32) bis 36-ste (a35) Bit definiert ist.

7. Verfahren nach einem der Ansprüche 4 bis 6, **dadurch gekennzeichnet, daß** im 37-sten (a36) bis 48-sten (a47) Bit der Rundsendenachricht (PT) die Doppel-Zeitschlitz-Information (dsi) und/oder die Übertragungsinformation (ti) eingefügt wird.

8. Verfahren nach Anspruch 7, **dadurch gekennzeichnet, daß** im 37-sten (a36) bis 42-sten (a41) Bit der Rundsendenachricht (TR) die Doppel-Zeitschlitz-Information (dsi) eingefügt wird.

9. Verfahren nach Anspruch 7 oder 8**, dadurch gekennzeichnet, daß** die Übertragungsinformation (ti) in das 46-ste (a45) bis 48- ste (a47) Bit der Rundsendenachricht (PT) eingefügt wird.

## Claims

1. Method for conveying information indicating the transmission capacity of a central device (BS) that communicates over a timeslot-orientated radio link (FS) with at least one non-centralised device (NT,MKE),
**characterised in that**
double-timeslot information (dsi) indicating the occupancy of double timeslots (ds) is inserted into a broadcast message (PT) emitted by the central device (BS) and able to be inserted into transmission frames.

2. Method according to claim 1, **characterised in that** when the central device (BS) is being connected to a communication network (KN), transmission information (ti) indicating the transmission capacity from the central device (BS) to the communication network (KN) is additionally inserted into the broadcast message (PT), with the non-centralised device (NT, MKE) being informed by the transmission information (ti) of how many of the double timeslots (ds) set up between the central device (BS) and communication network (KN) are free.

3. Method according to claim 2, **characterised in that** the transmission information (ti) indicates a number of available double timeslots (ds).

4. Method according to one of the preceding claims, **characterised in that** the radio link (FS) is implemented according to the international ETS 300 175 standard.

5. Method according to claim 4, **characterised in that** the information type (ITY) of the double-timeslot information (dsi) and/or transmission information (ti) is specified by the 33rd (a32) to 36th (a35) bit of the broadcast message (PT) defined in the Medium Access Layer (MAC).

6. Method according to claim 5, **characterised in that** either one of the information types (ITY) "reserved" previously reserved for further applications and defined by the 33rd (a32) to 36th (a35) bit as a blind double slot or the freely employable information type (ITY) "escape" defined by the 33rd (a32) to 36th (a35) bit is used for conveying the double-timeslot information (dsi) and/or transmission information (ti).

7. Method according to one of claims 4 to 6, **characterised in that** the double-timeslot information (dsi) and/or transmission information (ti) is inserted into the 37th (a36) to 48th (a47) bit of the broadcast message (PT).

8. Method according to claim 7, **characterised in that** the double-timeslot information (dsi) is inserted into the 37th (a36) to 42nd (a41) bit of the broadcast message (TR).

9. Method according to claim 7 or 8, **characterised in that** the transmission information (ti) is inserted into the 46th (a45) to 48th (a47) bit of the broadcast message (PT).

## Revendications

1. Procédé de transmission d'une information qui indique la capacité de transmission d'un dispositif central (BS) qui communique avec au moins un dispositif décentralisé (NT, MKE) via une voie radio (FS) orientée créneaux temporels, **caractérisé en ce qu'**une information relative aux créneaux temporels doubles (dsi) indiquant l'occupation de créneaux temporels doubles (ds) est insérée dans un message de diffusion émis par le dispositif central (BS) et insérable dans des trames de transmission.

2. Procédé selon la revendication 1, **caractérisé en ce que**, dans une liaison du dispositif central (BS) avec un réseau de communication (KN), une information de transmission (ti) indiquant la capacité de transmission du dispositif central (BS) vers le réseau de communication (KN) est additionnellement insérée dans le message de diffusion (PT) dans lequel, par l'information de transmission (ti), il est communiqué au dispositif décentralisé (NT, MKE) combien des créneaux temporels doubles (ds) aménagés entre le dispositif central (BS) et le réseau de communication (KN) sont libres.

3. Procédé selon la revendication 2, **caractérisé en ce que** l'information de transmission (ti) indique un nombre de créneaux temporels doubles (ds) disponibles.

4. Procédé selon l'une des revendications précédentes, **caractérisé en ce que** la voie radio (FS) est réalisée selon le standard international ETS 300 175.

5. Procédé selon la revendication 4, **caractérisé en ce que** le type d'information (ITY) de l'information relative aux créneaux temporels doubles (dsi) et/ou de l'information de transmission (ti) est défini par les bits 33 (a32) à 36 (a35) du message de diffusion (PT) défini dans la couche d'accès au médium (MAC).

6. Procédé selon la revendication 5, **caractérisé en ce que**, aux fins de la transmission des informations relatives aux créneaux temporels doubles (dsi) et/ou de l'information de transmission (ti), on utilise soit l'un des types d'information (ITY) «reserved» jusqu'à présent réservés pour d'autres applications, lesquels sont définis en tant que «Blind Double Slot» par les bits 33 (a32) à 36 (a35), soit le type d'information (ITY) «escape» librement utilisable, lequel est défini par les bits 33 (a32) à 36 (a35).

7. Procédé selon l'une des revendications 4 à 6, **caractérisé en ce que** l'information relative aux créneaux temporels doubles (dsi) et/ou l'information de transmission (ti) sont insérées dans les bits 37 (a36) à 48 (a47) du message de diffusion (PT).

8. Procédé selon la revendication 7, **caractérisé en ce que** l'information relative aux créneaux temporels doubles (dsi) est insérée dans les bits 37 (a36) à 42 (a41) du message de diffusion (TR).

9. Procédé selon la revendication 7 ou 8, **caractérisé en ce que** l'information de transmission (ti) est insérée dans les bits 46 (a45) à 48 (a47) du message de diffusion (PT).
